# EUROPÄISCHE PATENTANMELDUNG

(11) **EP 0 676 138 A1**
(43) Veröffentlichungstag der Anmeldung: **11.10.1995**
(21) Anmeldenummer: 95105168.9
(22) Anmeldetag: 06.04.1995
(51) Int. Cl.: A01M 1/00

(54) **Verfahren und Vorrichtung zur Abtötung von Schädlingen in einem davon befallenen Objekt**

(30) Priorität: 09.04.1994 DE 4412296
(71) Anmelder: Thermo Lignum Maschinen Vertriebs GmbH, D-69115 Heidelberg (DE)
(72) Erfinder: von Rotberg, Hans-Werner, D-69115 Heidelberg (DE); Piening, Heinrich, D-33442 Herzebrock-Clarholz (DE)
(74) Vertreter: Naumann, Ulrich, Dr.-Ing.

(57) **Zusammenfassung**

Ein Verfahren zur Abtötung von Schädlingen in einem davon befallenen Objekt, wobei das Objekt in einem Behandlungsraum auf eine Verfahrenstemperatur erwärmt und über eine vorgegebene Zeitspanne auf der Verfahrenstemperatur gehalten wird, ist insbesondere zur Behandlung hochsensibler Objekte derart ausgeführt, daß die Temperaturbehandlung zumindest teilweise in Inertgasatmosphäre stattfindet.

## Beschreibung

Die Erfindung betrifft ein Verfahren zur Abtötung von Schädlingen in einem davon befallenen Objekt, wobei das Objekt in einem Behandlungsraum auf eine Verfahrenstemperatur erwärmt und über eine vorgegebene Zeitspanne auf der Verfahrenstemperatur gehalten wird. Des weiteren betrifft die Erfindung eine Vorrichtung zur Abtötung von Schädlingen in einem davon befallenen Objekt, mit einem Behandlungsraum, einem Heizaggregat, ggf. einem Gebläse, einer Temperaturregelung und ggf. einer Luftrocknungs/Luftbefeuchtungseinrichtung, insbesondere zur Anwendung des erfindungsgemäßen Verfahrens.

Aus der Praxis sind unterschiedliche Verfahren zur Schädlingsbekämpfung an Objekten aus organischem Material, insbesondere aus Holz und Holzwerkstoffen, bekannt, um nämlich eine weitere Wertminderung oder gar Zerstörung der von Schädlingen - Pilzen, Schwämmen, Bakterien, Insekten, etc. - befallenen Objekte zu verhindern. Zu diesem Zwecke werden in herkömmlicher Weise chemische Mittel, nämlich Fungizide, Bakterizide und Insektizide, eingesetzt. Dabei ist es ganz besonders nachteilig, daß diese Mittel grundsätzlich gesundheitsschädliche Nebenwirkungen haben und die Umwelt belasten. Auch kann bei solchen Mitteln der Erfolg der Behandlung nicht garantiert werden, da nämlich die Chemikalien niemals an jede von Schädlingen befallene Stelle des zu behandelnden Objekts gelangen.

Aus der Bautechnik ist bereits eine Heißluftbehandlung zur Schädlingsbekämpfung in Dachstühlen, Holzbalkendecken, Fachwerkwänden, etc. bekannt, wonach erhitzte Luft unter Überdruck in das Gebäude eingeblasen wird und dieses auf eine vorgegebene Temperatur aufheizt, bei der die Holzschädlinge mit Sicherheit abgetötet werden. Dazu ist eine wiederum vorgegebene Einwirkzeit einzuhalten. Hier sei insbesondere auf DIN 688 800 "Holzschutz im Hochbau" verwiesen. Mit der Heißluftbehandlung geht jedoch eine Austrocknung der befallenen Objekte einher, die insbesondere bei der Bekämpfung von Pilzen oder Schwämmen aufgrund von Nässungen zumindest in der Bautechnik stets erwünscht ist, um nämlich das Mycelwachstum zu stoppen und den Pilz abzutöten. Hierzu wird lediglich beispielhaft auf die DE-OS 33 38 958 verwiesen.

Des weiteren ist aus der DE-PS 38 39 368 bereits ein Verfahren zur Abtötung von Schädlingen in einem davon befallenen Objekt bekannt, bei dem man das von Luft umgebene Objekt auf eine Endtemperatur erwärmt, bei der ein Leben der Schädlinge nicht mehr möglich ist. Während einer zur sicheren Abtötung der Schädlinge ausreichenden Zeitspanne wird das Objekt bei dieser Endtemperatur gehalten, wobei während der Erwärmung der Feuchtigkeitsgehalt der Luft derart geregelt wird, daß kein oder kein nennenswerter Feuchtigkeitsaustausch zwischen dem Objekt und der Luft erfolgt. Nach der Temperaturbehandlung läßt man dann das Objekt wieder abkühlen.

Auch aus der europäischen Patentschrift 0 432 296 B1 ist für sich gesehen ein Verfahren sowie eine Vorrichtung zur Schädlingsvernichtung, insbesondere bei der Konservierung von Objekten, bekannt, wobei hier der Feuchtigkeitsgehalt der Luft derart temperaturabhängig geregelt wird, daß man die relative Luftfeuchtigkeit in der Erwärmungsphase erhöht und in der Abkühlungsphase absenkt und dabei einer Kennlinie (hygroskopische Isotherme) der konstanten Objektfeuchtigkeit, insbesondere Holzfeuchtigkeit, bei der jeweiligen Temperatur und Luftfeuchtigkeit folgt, so daß kein oder kein nennenswert veränderter Feuchtigkeitsaustausch zwischen dem Objekt und der Luft erfolgen kann.

Des weiteren ist es für sich aus der Praxis bereits bekannt, alternativ zu den voranstehend genannten Verfahren eine Schädlingsbekämpfung mittels inerter Gase durchzuführen. Dieses Verfahren eignet sich insbesondere zur Schädlingsbekämpfung an hochsensiblen Objekten, die den doch relativ hohen Temperaturen bei der reinen Temperaturbehandlung - Temperaturen bis etwa 60° C - nicht ausgesetzt werden dürfen. Die Schädlingsbekämpfung auf der Basis inerter Gase hat zwar den Vorteil relativ geringer Verfahrenstemperaturen, nämlich Temperaturen ab etwa 15° C, hat jedoch gleichzeitig den erheblichen Nachteil, daß die Behandlung mittels inerter Gase über einen sehr langen Zeitraum, nämlich meist über einige Wochen hinweg, durchgeführt werden muß. Dies ist äußerst kostenaufwendig und erfordert insbesondere bei der Behandlung hochwertiger Objekte ganz besondere Sicherheitsmaßnahmen gegen Diebstahl, da nämlich die am üblichen Standort dieser Objekte vorgesehenen Absicherungen während der Behandlung in einem besonderem Behandlungsraum meist nicht vorgesehen sind. Insoweit entsteht obendrei ein versicherungstechnisches Problem über die gesamte sehr lange Behandlungsdauer hinweg.

Der vorliegenden Erfindung liegt daher die Aufgabe zugrunde, sowohl ein Verfahren als auch eine Vorrichtung zur Abtötung von Schädlingen in einem davon befallenen Objekt anzugeben, welches sich insbesondere bei hochsensiblen Objekten bei akzeptabler Behandlungsdauer anwenden läßt.

Das erfindungsgemäße Verfahren löst die voranstehende Aufgabe durch die Merkmale des Patentanspruches 1. Danach findet die Temperaturbehandlung zumindest teilweise in Inertgasatmosphäre statt.

Erfindungsgemäß ist erkannt worden, daß sich die beiden für sich gesehen jeweils bekannten Verfahren - Temperaturbehandlung und Behandlung in Inertgasatmosphäre - in ganz besonders vorteilhafter Weise kombinieren lassen, daß nämlich bei hochsensiblen Objekten die Behandlungstemperatur verringert werden kann, wenn die Temperaturbehandlung in Inertgasatmosphäre stattfindet oder daß sich die Behandlungsdauer in Inertgasatmosphäre ganz erheblich verkürzen läßt, wenn unter Inertgasatmosphäre gleichzeitig eine Temperaturbehandlung stattfindet bzw. das Inertgas und somit das zu behandelnde Objekt erwärmt wird.

In ganz besonders vorteilhafter Weise wird eine sichere und vollständige Abtötung der Schädlinge durch Abstimmung von Verfahrenstemperatur und Verfahrensdauer unter Berücksichtigung der Empfindlichkeit des Objekts erreicht. Je nach Beschaffenheit des Objekts läßt sich das erfindungsgemäße Verfahren mal mit höherer Temperatur und mal mit längerer Behandlungsdauer realisieren, wobei sich das erfindungsgemäße Verfahren ideal auf das Objekt bzw. dessen Beschaffenheit einstellen läßt.

Als Inertgas könnte bspw. Stickstoff verwendet werden, wobei hier keine Umweltbelastung stattfindet. Ebenso könnte als Inertgas CO₂ verwendet werden. Hier sollte ganz besonders auf die zu bekämpfenden Schädlinge und deren Mortalitätsrate in den jeweiligen Gasen bei den höchstzulässigen Temperaturen abgestellt werden.

Ebenso ist es denkbar, als Inertgas ein Gasgemisch zu verwenden, welches hinsichtlich seiner Konsistenz ebenfalls auf die zu bekämpfenden Schädlinge abzustimmen ist. Als Gasgemisch könnte ein Gemisch verwendet werden, welches im wesentlichen aus Stickstoff und CO₂ besteht.

Hinsichtlich des Behandlungsraumes ist es von ganz besonderem Vorteil, wenn dieser vor der Inertgasbehandlung zumindest weitgehend gasdicht verschlossen wird. Ein hermetisch abgeschlossener Behandlungsraum hat den großen Vorteil, daß sowohl das Gas als auch die in Form von Wärme vorhandene Energie nicht in die Umwelt gelangen. Insoweit lassen sich die Kosten des Verfahrens ganz erheblich verringern.

Des weiteren ist es von ganz besonderem Vorteil, wenn der Behandlungsraum vor der Temperaturbehandlung mit Inertgas gespült und somit die Luft bzw. der Sauerstoff verdrängt wird. Die Tempearturbehandlung könnte dann in reiner bzw. reinster Inertgasatmosphäre stattfinden. Ebenso wäre es jedoch auch denkbar, daß zunächst eine reine Temperaturbehandlung über einen gewissen Zeitraum hinweg stattfindet und daß der Behandlungsraum erst während der - vorgeschalteten - Temperaturbehandlung mit Inertgas gespült und somit die Luft bzw. der Sauerstoff verdrängt wird. Eine solche Behandlung wäre quasi zweistufig, würde nämlich zunächst eine reine Temperaturbehandlung und dann eine kombinierte Temperatur-/Inertgasbehandlung umfassen. Auch wäre es denkbar, zunächst eine reine Inertgasbehandlung durchzuführen und erst dann - separat oder simultan - eine Temperaturbehandlung hinzuzuschalten. Schließlich könnten die reine Inertgasbehandlung, die Temperaturbehandlung und die kombinierte Inertgas-/Temperaturbehandlung zyklisch bzw. periodisch durchgeführt werden, um nämlich die Mortalitätsrate bei bestimmten Schädlingen zu erhöhen bzw. eine völlige Vernichtung der Schädlinge durch alternierende Behandlung zu gewährleisten.

Bei der kombinierten Inertgas-/Temperaturbehandlung könnte die Verfahrenstemperatur in vorteilhafter Weise auch ein vorgebbares Temperaturprofil durchlaufen. So könnten Spitzentemperaturen zur Schonung der Objekte nur kurzfristig gehalten und die Objekte anschließend durch Spülen mit Inertgas wieder abgekühlt werden.

Zum Erhalt der gewünschten Verfahrenstemperatur - ob gleichförmig oder alternierend bzw. im Verlaufe eines Temperaturprofils - wird das Inertgas vorzugsweise über einen Wärmetauscher ständig erwärmt und im Behandlungsraum umgewälzt. Die Zirkulation des Inertgases verhindert einerseits eine Entmischung, insbesondere bei hohen Feuchtigkeitswerten im Gas, und gewährleistet andererseits eine gleichmäßige Temperaturverteilung im Behandlungsraum. Die Verfahrenstemperatur liegt in weiter vorteilhafter Weise im Bereich zwischen 25° C und 55° C, wobei kurzfristig auch Temperaturen bis zu 60° C realisiert werden können. Bei niedrigen Verfahrenstemperaturen ist jedoch die Inertgasbehandlung über einen langen Zeitraum hinweg durchzuführen. Im oberen Temperaturbereich ist zum Erreichen einer hinreichenden Mortalität nahezu keine Inertgasbehandlung erforderlich. Folglich lassen sich hochsensible Objekte durch geeignete Wahl der Verfahrensparameter - Verfahrenstemperatur und Verfahrensdauer - bei geringstmöglicher Beanspruchung individuell behandeln.

Wie bereits zuvor erwähnt, liegt die Verfahrenstemperatur im Bereich weniger Minuten - nämlich bei hoher Verfahrenstemperatur - bis mehrere Tage - nämlich bei niedriger Verfahrenstemperatur. Letztendlich läßt sich die Verfahrenstemperatur in dem zuvor genannten Temperaturbereich unter Berücksichtigung der Objektqualität bzw. Objektsensibilität vorgeben, so daß die Verfahrensdauer und Inertgasatmosphäre derart einstellbar ist, daß eine völlige Abtötung der Schädlinge stattfindet.

In weiter vorteilhafter Weise wird nun über die Verfahrenstemperatur hinweg der Feuchtigkeitsgehalt des Inertgases geregelt. Dadurch kann eine Austrocknung des zu behandelnden Objektes zumindest weitgehend vermieden werden. Auch wäre es denkbar, daß im Zeitverlauf bzw. im Temperaturverlauf vorgebbare Feuchtigkeitsgehalte eingestellt werden. Der Feuchtigkeitsgehalt des Inertgases könnte auch derart geregelt werden, daß kein oder kein nennenswerter Feuchtigkeitsaustausch zwischen dem Objekt und dem Gas erfolgt, wobei in diesem Falle sowohl eine Feuchtigkeitsmessung als auch eine Temperaturmessung direkt am Objekt erfolgen sollte.

Die erfindungsgemäße Vorrichtung - zur Anwendung des erfindungsgemäßen Verfahrens - löst die zuvor genannte Aufgabe durch die Merkmale des Patentanspruches 7. Danach ist die eingangs genannte Vorrichtung derart ausgebildet, daß der Behandlungsraum zumindest weitgehend gasdicht ausgeführt und mindesetens eine Inertgasquelle zum Spülen bzw. Füllen des Behandlungsraumes vorgesehen ist. Diese Inertgasquelle könnte direkt dem Behandlungsraum zugeordnet oder - im Baukastensystem - außerhalb des Behandlungsraumes vorgesehen sein. Wesentlich ist jedenfalls, daß sich der Behandlungsraum mit Inertgas spülen bzw. fluten läßt.

In weiter vorteilhafter Weise sind mindestens zwei Inertgasquellen zur Erzeugung eines Inertgasgemischs vorgesehen. Durch die Vorkehrung mindestens zweier Inertgasquellen läßt sich ein Inertgasgemisch in vorgebbaren Anteilen realisieren, welches auf den Typus des zu bekämpfenden Schädlings - beispielsweise unter Zugrundelegung von Erfahrenswerten - einstellbar ist.

Des weiteren ist in vorteilhafter Weise eine Umwälzeinrichtung für das im Behandlungsraum befindliche Inertgas bzw. Inertgasgemisch vorgesehen, so daß durch ständiges Umwälzen einerseits eine gleichmäßige Temperaturbehandlung im Behandlungsraum erreicht wird und andererseits eine Entmischung des Gases, insbesondere bei erheblichem Feuchtegehalt, wirksam vermieden ist.

In ganz besonders vorteilhafter Weise ist die erfindungsgemäße Vorrichtung als mobile Behandlungsstation ausgeführt. Dies hat bspw. bei der Behandlung hochwertiger Kunstgegenstände den enormen Vorteil, daß die Behandlung des Objekts vor Ort, bspw. innerhalb eines besonders gesicherten Museums, stattfinden kann. Ein aufwendiger und ein erhebliches Diebstahlrisiko mit sich bringender Transport der Objekte ist somit nicht mehr möglich.

Im konkreten könnte der Behandlungsraum als klimageregelter Container ausgeführt sein, wobei dieser Container selbstverständlich zumindest weitgehend gasdicht sein muß. Sämtliche Aggregate könnten diesem Container direkt zugeordnet sein, so daß der Container für sich gesehen eine kompakte Behandlungseinheit darstellt. Ebenso wäre es jedoch möglich, den Container als reinen Behandlungscontainer auszuführen und die zur Temperatur- und Gasbeaufschlagung erforderlichen Aggregate in einem weiteren Container, nämlich in einem Gerätecontainer, unterzubringen. Eine solche Ausgestaltung hätte den enormen Vorteil, daß von einem Gerätecontainer her mehrere Behandlungscontainer mit temperiertem Inertgas versorgt werden können, so daß gleichzeitig Objekte in mehreren Containern behandelbar sind. Insoweit ließe sich der apparative Aufwand insgesamt ganz erheblich verringern.

Abschließend sei darauf hingewiesen, daß es verschiedene Möglichkeiten gibt, die Lehre der Erfindung in vorteilhafter Weise auszugestalten und weiterzubilden. Dazu wird ganz besonders auf die den Patentansprüchen 1 und 7 nachgeordneten Ansprüche verwiesen. Auf eine beispielhafte Darstellung eines Ausführungsbeispiels anhand einer Zeichnung wird verzichtet, da eine solche Zeichnung zur Erörterung der erfindungsgemäßen Lehre nicht erforderlich ist.

## Patentansprüche

1. Verfahren zur Abtötung von Schädlingen in einem davon befallenen Objekt, wobei das Objekt in einem Behandlungsraum auf eine Verfahrenstemperatur erwärmt und über eine vorgegebene Zeitspanne auf der Verfahrenstemperatur gehalten wird, **dadurch gekennzeichnet,** daß die Temperaturbehandlung zumindest teilweise in Inertgasatmosphäre stattfindet, wobei eine sichere und vollständige Abtötung der Schädlinge durch Abstimmung von Verfahrenstemperatur und Verfahrensdauer unter Berücksichtigung der Empfindlichkeit des Objekts erreicht wird.

2. Verfahren nach Anspruch 1, dadurch gekennzeichnet, daß als Inertgas Stickstoff, CO₂ oder ein Gasgemisch, vorzugsweise im wesentlichen aus Stickstoff und CO₂, verwendet wird.

3. Verfahren nach einem der Ansprüche 1 oder 2, dadurch gekennzeichnet, daß der Behandlungsraum vor der Inertgasbehandlung zumindest weitgehend gasdicht verschlossen wird und daß der Behandlungsraum vor und/oder während der Temperaturbehandlung mit Inertgas gespült und somit die Luft bzw. der Sauerstoff verdrängt wird.

4. Verfahren nach einem der Ansprüche 1 bis 3, dadurch gekennzeichnet, daß die Verfahrenstemperatur ein vorgebbares Temperaturprofil durchläuft und daß die Verfahrenstemperatur im Bereich zwischen 25°C und 55°C liegt.

5. Verfahren nach einem der Ansprüche 1 bis 4, dadurch gekennzeichnet, daß das Inertgas ständig erwärmt und in dem Behandlungsraum umgewälzt wird.

6. Verfahren nach einem der Ansprüche 1 bis 5, dadurch gekennzeichnet, daß die Verfahrensdauer im Bereich weniger Minuten - bei hoher Verfahrenstemperatur - bis mehrerer Tage - bei niedriger Verfahrenstemperatur - liegt und daß über die Verfahrensdauer hinweg der Feuchtigkeitsgehalt des Inertgases geregelt wird, so daß im Zeitverlauf vorgebbare Feuchtigkeitsgehalte eingestellt werden und insbesondere so, daß kein oder kein nennenswerter Feuchtigkeitsaustausch zwischen dem Objekt und dem Gas erfolgt.

7. Vorrichtung zur Abtötung von Schädlingen in einem davon befallenen Objekt, mit einem Behandlungsraum, einem Heizaggregat, ggf. einem Gebläse, einer Temperaturregelung und ggf. einer Lufttrocknungs-/Luftbefeuchtungseinrichtung, insbesondere zur Anwendung des Verfahrens nach einem der Ansprüche 1 bis 6, **dadurch gekennzeichnet,** daß der Behandlungsraum zumindest weitgehend gasdicht ausgeführt und mindestens eine Inertgasquelle zum Spülen bzw. Füllen des Behandlungsraumes vorgesehen ist.

8. Vorrichtung nach Anspruch 7, dadurch gekennzeichnet, daß mindestens zwei Inertgasquellen zur Erzeugung eines Inertgasgemischs vorgesehen sind.

9. Vorrichtung nach Anspruch 7 oder 8, dadurch gekennzeichnet, daß eine Umwälzeinrichtung für das im Behandlungsraum befindliche Inertgas bzw. Inertgasgemisch vorgesehen ist.

10. Vorrichtung nach einem der Ansprüche 7 bis 9, gekennzeichnet durch die Ausgestaltung als mobile Behandlungsstation, wobei der Behandlungsraum als klimageregelter Container ausgeführt ist und in einem zweiten Container sämtliche Aggregate untergebracht sind.
